# EUROPÄISCHE PATENTANMELDUNG

(11) **EP 4 732 728 A2**
(43) Veröffentlichungstag der Anmeldung: **29.04.2026**
(21) Anmeldenummer: 25206857.2
(22) Anmeldetag: 06.10.2025
(51) Int. Cl.: A47K 3/30, C09J 7/22, E04F 13/08

(54) **ZWISCHENMITTEL**

(30) Priorität: 06.10.2024 AT 508102024
(71) Anmelder: TIF GmbH, 39042 Brixen (BZ) (IT)
(72) Erfinder: Krapf, Daniel, 39042 Brixen (IT)
(74) Vertreter: Schwarz & Partner Patentanwälte GmbH

(57) **Zusammenfassung**

Zwischenmittel (10, 10') zur Montage einer Duschabtrennung (5), bevorzugt eine Glasscheibe, an einer Wand und/oder einem Bodenbelag, wobei das Zwischenmittel (10, 10') zumindest drei Schichten aufweist, dadurch gekennzeichnet, dass eine erste Schicht (3) der Duschabtrennung (5) zugewandt und mit der Duschabtrennung (5) klebend verbindbar ist, während eine zweite Schicht (1) der Wand oder dem Bodenbelag zugewandt und mit der Wand oder dem Bodenbelag klebend verbindbar ist, wobei eine dritte Schicht (2) zwischen der ersten und zweiten Schicht (1, 3) angeordnet ist und wobei die dritte Schicht (2) einen Kunststoff, bevorzugt einen transparenten Kunststoff, umfasst.

## Beschreibung

Die vorliegende Erfindung betrifft ein Zwischenmittel zur Montage einer Duschabtrennung, bevorzugt einer Glasscheibe, an einer Wand und/oder einem Bodenbelag, wobei das Zwischenmittel zumindest drei Schichten aufweist. Zudem betrifft die Erfindung ein Verfahren zur Montage einer Duschabtrennung an einer Wand und einem Bodenbelag. Schließlich betrifft die Erfindung eine Stütze für die Montage einer Duschabtrennung an einer Wand oder einem Bodenbelag.

### HINTERGRUND DER ERFINDUNG

Seit einigen Jahren ist es vermehrt zum Standard geworden, dass "Walk-in" Duschen sich zur Standardduschkabine entwickelt haben. Derartige Duschkabinen weisen eine seitliche Duschabtrennung auf. Die Duschabtrennung besteht typischerweise aus einer Glasscheibe mit einer Dicke von ungefähr 6 bis 10 mm, wobei die Glasscheibe oft von einem Metallrahmen getragen wird. Da jedoch die Nachfrage nach moderneren, ästhetischeren und minimalistischeren Badezimmerdesigns steigt, erfreuen sich Duschwände mit möglichst rahmenlosen Designs zunehmender Beliebtheit.

Um zumindest das Bodenprofil zu sparen und dieser Nachfrage nachzukommen, nutzen einige Hersteller einen kanalförmigen Rahmen, welcher an der Wand befestigt ist und somit nur denjenigen Teil der Glasscheibe umrahmt, welcher zur Wand zugewandt ist. Jedoch ist hierbei weiterhin teilweise die Glasscheibe gerahmt, weswegen die Ästhetik weiter gestört ist und die Glasscheibe nicht ihre maximale Transparenz zur Geltung bringen kann.

Andere Konstruktionen verzichten auf den Metallrahmen, indem Hersteller Metallklammern und/oder Stabilisationsstangen verwenden, um ein möglichst rahmenloses Design darzustellen. Jedoch sind hierbei weiterhin Befestigungselemente sichtbar, welche die Ästhetik und Moderne der Duschabtrennung stören. Zudem ist auch bei solchen Konstruktionen die maximale Transparenz von Glasscheiben nicht erreichbar.

Des Weiteren müssen der Teilrahmen oder die Metallklemmen oder die Stabilisationsstangen an der Wand und zumeist auch dem Boden befestigt werden. Die Befestigung wird über Bohrund Schraubprozesse ermöglicht. Dies kann die Montage von Glasscheiben als Duschwände erschweren und die Montagedauer verlängern. Außerdem können sich durch die verwendeten Metallkomponenten Reflexionen ergeben, welche unerwünscht und störend sind. Darüber hinaus ist die Reinigung von Glasscheiben mit störenden Halteelemente schwieriger und zeitaufwändiger.

### KURZBESCHREIBUNG DER ERFINDUNG

Aufgabe der vorliegenden Erfindung ist daher ein möglichst einfache sowie bohr- und schraubfreie Montage eines Bauelementes an einer Wand oder einem Boden oder an beidem. Zudem soll die Erfindung die maximale Transparenz von Glasscheiben erhalten, ohne dabei störende Reflexionen zu erzeugen.

Gelöst wird diese Aufgabe durch ein Zwischenmittel zur Montage einer Duschabtrennung, bevorzugt einer Glasscheibe, an einer Wand und/oder einem Bodenbelag, wobei das Zwischenmittel zumindest drei Schichten aufweist, wobei eine erste Schicht der Duschabtrennung zugewandt und mit der Duschabtrennung klebend verbindbar ist, während eine zweite Schicht der Wand oder dem Bodenbelag zugewandt und mit der Wand oder dem Bodenbelag klebend verbindbar ist, wobei eine dritte Schicht zwischen der ersten und zweiten Schicht angeordnet ist. Die erste und zweite Schicht dienen hierbei dazu, eine Verbindung zwischen dem Zwischenmittel und der Duschabtrennung sowie eine Verbindung zwischen dem Zwischenmittel und dem Bodenbelag oder der Wand herzustellen. In weitere Folge bewirkt das Zwischenmittel, dass eine Verbindung zwischen Duschabtrennung und Wand sowie Duschabtrennung und Bodenbelag herstellbar ist. Damit kann jegliche Art an Profilen und Klemmen wegfallen und es ergibt sich ein optischer Eindruck, welcher nicht durch Profile oder Klemmen gestört ist. Des Weiteren ist dadurch eine maximale Transparenz der Duschabtrennung, bevorzugt eine im Wesentlichen transparente Glasscheibe, ermöglicht. Die Montage ist zudem durch den Wegfall von Bohr- und Schraubarbeiten erleichtert. Eine Erleichterung gilt auch für den Reinigungsprozess der Duschabtrennung.

Die Duschabtrennung, insbesondere die Glasscheibe, kann an einer Stirnseite auf diese Art allein mit Zwischenmittel an einer Wand oder einem Bodenbelag befestigt werden. Es wird kein Profil, Rahmen oder Halteelement zwischen Wand und Duschabtrennung benötigt.

Darüber hinaus kann das Zwischenmittel als Stoßschutz wirken und einen definierten Spalt zwischen Duschabtrennung und Wand und/oder zwischen Duschabtrennung und Bodenbelag einstellen.

Das Zwischenmittel kann beispielsweise eine Breite von 5,65 bis 7 mm und eine Länge von 100 bis 200 mm, vorzugsweise etwa 150 mm aufweisen.

In einer bevorzugten Ausführungsform umfasst die dritte Schicht einen Kunststoff, welcher bevorzugt transparent ist. Ein Beispiel für einen solchen Kunststoff ist Polycarbonat (PC) oder Polymethylmethacrylat (PMMA). Durch die Verwendung eines Kunststoffes, welcher vorzugsweise transparent ist, können mögliche störende Reflexionen, welche bei Lichteinstrahlung auftreten, verhindert werden.

Zudem kann die erste und zweite Schicht ein transparentes Material, vorzugsweise eine transparente Klebeschicht, umfassen.

In einer speziellen Ausführungsform weist die dritte Schicht eine Dicke von 1,1 bis 1,5 mm auf.

Aus dem Stand der Technik ist ein Zwischenmittel mit einer Metallschicht aus Aluminium bekannt. Durch diese Metallschicht treten störende Reflexionen auf, welche durch die Verwendung einer Kunststoffschicht, insbesondere einer transparenten Kunststoffschicht, vermieden werden können.

Die dritte Schicht kann eine Kontur aufweisen. Die Kontur weist bevorzugt Vorsprünge auf, wobei die erste und/oder die zweite Schicht zwischen den Vorsprüngen angeordnet ist. Dadurch wird die erste oder die zweite Schicht seitlich begrenzt und auf der dritten Schicht stabilisiert. Die Kontur kann im Querschnitt bevorzugt als Doppel-T oder als T, U, H oder I ausgeformt sein. Doppel-T, T, U, H oder I weisen entsprechende Vorsprünge auf. Durch eine solche Ausformung ist die Aufnahme der ersten und zweiten Schicht einfacher. Zudem ist über die Kontur ein Austreten der ersten und zweiten Schicht des Zwischenmittels, über die Breite der Stirnfläche der Duschabtrennung hinaus, verhinderbar.

In einer anderen speziellen Ausführungsform sind die Dicken der ersten und zweiten Schicht unterschiedlich, wobei vorzugsweise die zweite Schicht dicker ist als die erste Schicht. Durch eine solche unterschiedliche Verteilung der Dicken ist es möglich, Unebenheiten der Wand auszugleichen. Demensprechend wäre es beispielsweise möglich, dass die Dicke der ersten Schicht 0,5 mm beträgt, während die Dicke der zweiten Schicht 1,5 mm beträgt.

Die erste und zweite Schicht kann einen Acrylschaum, welcher bevorzugt geschlossenzellig bzw. geschlossenporig ist, als Klebstoffträger und ein Acrylat als Klebstoff umfassen. Zudem können die erste und zweite Schicht eine UV- sowie Lösemittelbeständigkeit aufweisen.

In einer Ausführungsform ist eine abziehbare Abdeckfolie an der ersten oder zweiten Schicht angeordnet. Dies bewirkt, dass zumindest eine Klebefläche der ersten oder zweiten Schicht geschützt ist.

Die erste Schicht des Zwischenmittels kann mit einer vertikalen Stirnseite der Duschabtrennung verbunden sein. Somit kann das Zwischenmittel bereits ab der Auslieferung mit der Duschabtrennung verbunden sein, um den Montageaufwand zu reduzieren. In diesem Fall kann die Klebefläche der zweiten Schicht durch eine Abdeckfolie geschützt sein.

Die erste Schicht von des Zwischenmittels kann mit einer vertikalen Stirnseite der Duschabtrennung, welche zur Wand zugewandt ist, verbunden sein, während die zweite Schicht von zumindest einem zweiten Zwischenmittel mit dem Bodenbelag verbunden sein kann. Dadurch ergibt sich eine stabilere Verbindung zwischen Duschabtrennung und Wand sowie Duschabtrennung und Bodenbelag.

In einer anderen Ausführungsform ist jeweils eine abziehbare Abdeckfolie an der ersten Schicht und zweiten Schicht des Zwischenmittels angeordnet. Somit sind die Klebeflächen der ersten und zweiten Schicht geschützt.

Die Erfindung betrifft demnach auch eine Duschabtrennung, vorzugsweise Glasscheibe, umfassend ein Zwischenmittel der vorgenannten Art, wobei das Zwischenmittel über die erste Schicht mit zumindest einer Stirnseite der Duschabtrennung klebend verbunden ist.

Vorzugsweise ist eine abziehbare Abdeckfolie an der zweiten Schicht des Zwischenmittels angeordnet.

Die Aufgabe wird außerdem durch ein Verfahren zur Montage einer Duschabtrennung, vorzugsweise eine Glasscheibe, an einer Wand und/oder einem Bodenbelag mittels eines Zwischenmittels, umfassend die Schritte:
(a) Reinigen und Vorbereiten der Montageflächen,
(b) Anbringen von Stützen, vorzugsweise L-förmige Stützen, an der Wand und dem Bodenbelag, wobei die Stützen als Führung zum Einsetzen und Anbringen der Duschabtrennung dienen,
(c) Einführen der Duschabtrennung in die Führung, welche von den Stützen erzeugt wurde,
(d) Verbinden der Duschabtrennung mit der Wand und/oder dem Bodenbelag über zumindest ein Zwischenmittel,
(e) Entfernen der Stützen, und
(f) Verkleben und Abdichten der Duschabtrennung mit der Wand und dem Bodenbelag mittels einem Dichtmittel, vorzugsweise Silikon.

Dieses Verfahren ermöglicht es, freistehende und rahmenlose Duschwände mit der Wand und dem Bodenbelag zu verbinden. Dadurch ergeben sich die zuvor genannten Vorteile. Zusätzlich erhöht das Verkleben und Abdichten mit dem Dichtmittel die Stabilität der Verbindung zwischen der Duschabtrennung und der Wand sowie zwischen der Duschabtrennung und dem Bodenbelag.

Bevor die Duschabtrennung in die Führung eingeführt wird, wird in einer speziellen Ausführungsform zumindest ein Abstandshalter auf den Bodenbelag aufgebracht. Dieser ermöglicht das Einstellen eines definierten Spalts zwischen Duschabtrennung und Bodenbelag.

In einer Ausführungsform ist zumindest ein Zwischenmittel mit einer vertikalen Stirnseite der Duschabtrennung verbunden. Dadurch kann ein Zwischenschritt, welcher das Aufbringen des Zwischenmittels auf die Duschabtrennung beinhalten würde, gespart werden und somit der Aufwand der vor Ort Montage verringert werden.

Vor Schritt (c) kann ein Zwischenschritt erfolgen. Dieser Zwischenschritt beinhaltet das Abziehen von einer ersten abziehbaren Abdeckfolie von zumindest einem Zwischenmittel. Die erste oder zweite Schicht des Zwischenmittels kann dann mit der Duschabtrennung, der Wand oder dem Bodenbelag verbunden werden. Das Zwischenmittel wird hierbei bevorzugt mit einer vertikalen Stirnseite der Duschabtrennung verbunden. Dadurch ergibt sich eine möglichst hohe Flexibilität innerhalb der Montage des Zwischenmittels oder der Zwischenmittel.

Nach Schritt (c) kann ein Zwischenschritt erfolgen, welcher das Abziehen einer zweiten Abdeckfolie von zumindest einem Zwischenmittel und das Verbinden der Duschabtrennung mit der Wand und dem Bodenbelag beinhaltet. Die Duschabtrennung wird hierbei über ein erstes Zwischenmittel mit der Wand verbunden und über ein zweites Zwischenmittel wird die Duschabtrennung mit der dem Bodenbelag verbunden. Dadurch ergibt sich eine möglichst stabile Verbindung zwischen Duschabtrennung und Wand sowie zwischen Duschabtrennung und Bodenbelag.

In einer anderen Ausführungsform erfolgt nach Schritt (c) ein Zwischenschritt, welcher das Abziehen einer zweiten Abdeckfolie von zumindest einem Zwischenmittel und das Verbinden der Duschabtrennung mit der Wand oder dem Bodenbelag beinhaltet. Die Duschabtrennung wird hierbei über ein Zwischenmittel mit der Wand oder mit dem Bodenbelag verbunden. Dadurch ergibt sich eine möglichst stabile Verbindung zwischen Duschabtrennung und Wand oder Bodenbelag.

In einer weiteren Ausführungsform ist ein Abschnitt eines Zwischenmittels oder zumindest ein Zwischenmittel auf der vertikalen Stirnseite der Duschabtrennung, welche zur Wand zugewandt ist, entfernbar. Durch das Entfernen von einem Zwischenmittel oder einem Abschnitt eines Zwischenmittel ist es möglich Unebenheiten von Wänden auszugleichen. Das Zwischenmittel ermöglicht es Unebenheiten im Bereich von ein paar Millimetern auszugleichen.

Die Erfindung betrifft in einem Aspekt außerdem eine Stütze für die Montage einer Duschabtrennung an einer Wand oder einem Bodenbelag mittels eines Zwischenmittels der vorgenannten Art.
Die Stütze für die Montage einer Duschabtrennung an einer Wand oder einem Bodenbelag umfasst zwei L-förmige Abschnitte, wobei jeder L-förmige Abschnitt einen langen und einen kurzen Schenkel umfasst,
wobei die beiden L-förmigen Abschnitte an den kurzen Schenkeln Verbindungselemente aufweisen, sodass die kurzen Schenkel miteinander lösbar verbindbar sind und im verbundenen Zustand einen U-förmigen Kanal bilden,
wobei die Verbindung der L-förmigen Abschnitte lösbar ist, sodass die beiden L-förmigen Abschnitte nach Lösen der Verbindung Rücken an Rücken mit Abstand platzierbar sind, um einen Kanal zwischen den langen Schenkeln der L-förmigen Abschnitte zu bilden.

Eine solche Stütze kann dazu dienen, die Duschabtrennung der vorgenannten Art ideal an einem Bodenbelag oder einer Wand zu platzieren. Die Stütze wird an der Wand oder am Bodenbelag so fixiert, dass die beiden L-förmigen Abschnitte zwischen den langen Schenkeln der L-förmigen Abschnitte einen Kanal bilden, in dem die Duschabtrennung positioniert wird. An den kurzen Schenkeln wir die Stütze an der Wand oder am Bodenbelag fixiert, bevorzugt verklebt. Daher können an den kurzen Schenkeln bereits Klebemittel vorgesehen sein.

In einer bevorzugten Ausführungsform ist vorgesehen, dass der U-förmige Kanal eine Breite aufweist, welcher der Dicke der Duschabtrennung entspricht. In diesem Fall kann die Stütze nicht nur einerseits eine Montagehilfe sein und sondern andererseits auch als Transportschutz dienen.

Die Stütze kann aus Kunststoff, wie PMMA, ABS oder dergleichen gefertigt sein. Bevorzugt sind die L-förmigen Abschnitte im Querschnitt L-förmig und in Längsrichtung im Wesentlichen als gerader Zylinder ausgebildet.

An den beiden L-förmigen Abschnitten sind an den kurzen Schenkeln Verbindungselemente vorgesehen, wobei das Verbindungselement an einem L-förmigen Abschnitt eine komplementäre Profilform zur Profilform am anderen L-förmigen Abschnitt aufweist. Die beiden zueinander komplementären Profilformen erstrecken sich entlang der kurzen Schenkel des L und sind ineinander schiebbar, sodass sie einen Formschluss bilden. Dadurch kann in der Art einer Schwalbenschwanzverbindung eine Verbindung hergestellt werden. Z.B. kann eine Profilform eine Nut bilden, die sich zur offenen Seite verjüngt und eine Profilform kann eine Feder bilden, die komplementär zur Nut ist.

### DETAILLIERTE BESCHREIBUNG DER ERFINDUNG

Weitere Details und Vorteile der Erfindung sind nachfolgend mit Figuren weiter beschrieben. Die nachfolgenden Beschreibungen der Figuren sind jedoch nicht als einschränkend anzusehen.

Es zeigen:
- Fig. 1: Frontansicht einer Duschabtrennung und zwei erfindungsgemäßen Zwischenmittel, welche mit der vertikalen Stirnseite der Duschabtrennung verbunden sind.
- Fig. 2: Draufsicht eines erfindungsgemäßen Zwischenmittels.
- Fig. 3: Isometrische Darstellung einer Duschabtrennung, welche mit zwei erfindungsgemäßen Zwischenmitteln sowie einer Stabilisationsstange verbunden ist.
- Fig. 4: Montageschritt des Anbringens von Stützen.
- Fig. 5: Montageschritt des optionalen Auflegens von Abstandshaltern.
- Fig. 6: Montageschritt des optionalen Entfernens von einem erfindungsgemäßen Zwischenmittels.
- Fig. 7: Montageschritt des Einführens der Duschabtrennung in diejenige Führung, welche von den Stützen bereitgestellt wird.
- Fig. 8a, 8b: zeigen eine erfindungsgemäße Stütze für die Montage einer Duschabtrennung an einer Wand oder einem Bodenbelag.

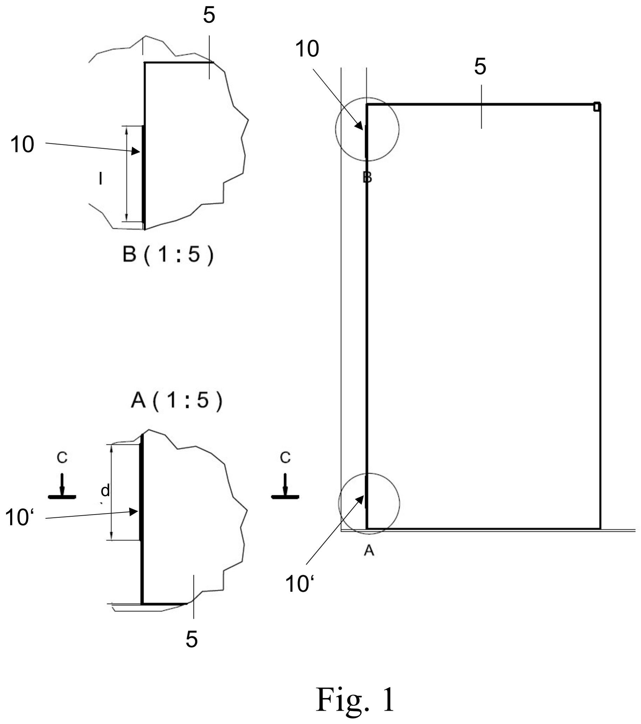

In Fig. 1 sind eine Duschabtrennung 5 in der Frontansicht sowie zwei erfindungsgemäße Zwischenmittel 10, 10' dargestellt. Die beiden Zwischenmittel 10, 10' sind mit einer vertikalen Stirnseite der Duschabtrennung 5 verbunden, wobei das erstes Zwischenmittel 10 in einem höheren Bereich der Duschabtrennung 5 angeordnet ist als das zweite Zwischenmittel 10'. Das Zwischenmittel 10, 10' kann beispielsweise eine Länge d von 100 bis 200 mm, vorzugsweise etwa 150 mm aufweisen.

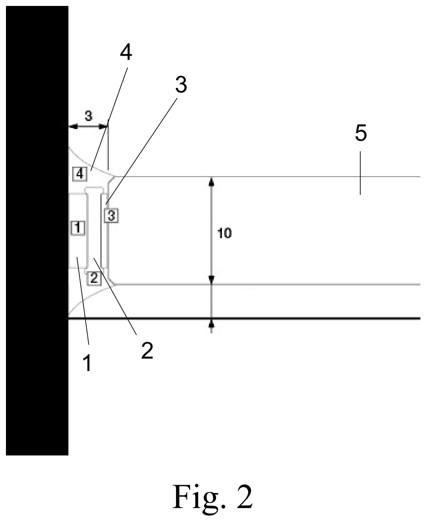

Eine Draufsicht eines erfindungsgemäßen Zwischenmittels 10, 10' ist in Fig. 2 gezeigt. Das Zwischenmittel 10, 10' umfasst eine erste Schicht 3, welche mit einer Duschabtrennung 5 klebend verbunden ist, eine zweite Schicht 1, welche mit einer Wand klebend verbunden ist, und eine dritte Schicht 2, welche zwischen der ersten Schicht 3 und der zweiten Schicht 1 angeordnet und klebend mit den beiden Schichten 1, 3 verbunden ist. Bei der dritten Schicht 2 handelt es sich in diesem Fall um Makrolon ET3227. Die erste und zweite Schicht 1, 3 ist hierbei jeweils als Klebeschicht oder Klebefläche konfiguriert, während die dritte Schicht 2 als Doppel-T ausgeformt ist, wobei die Doppel-T Kontur im Querschnitt erkennbar ist. Durch die Doppel-T Kontur kann ein Austreten der beiden Klebeflächen vermieden werden. Zudem zeigt Fig. 2 ein Dichtmittel 4, welches das erfindungsgemäße Zwischenmittel 10, 10' umhüllt und die Duschabtrennung 5 mit der Wand verklebt und abdichtet.

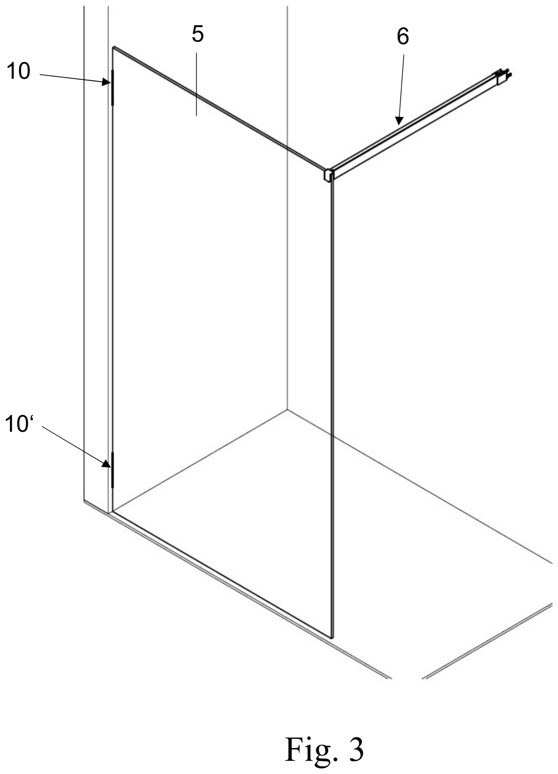

Fig. 3 zeigt eine montierte Duschabtrennung 5, welche zusätzlich mit einer Stabilisationsstange 6 zusätzlich fixiert ist. An der zur Wand zugewandten Stirnseite der Duschabtrennung 5 sind zwei erfindungsgemäße Zwischenmittel 10, 10' angeordnet, welche mit der Duschabtrennung 5 und der Wand verbunden sind.

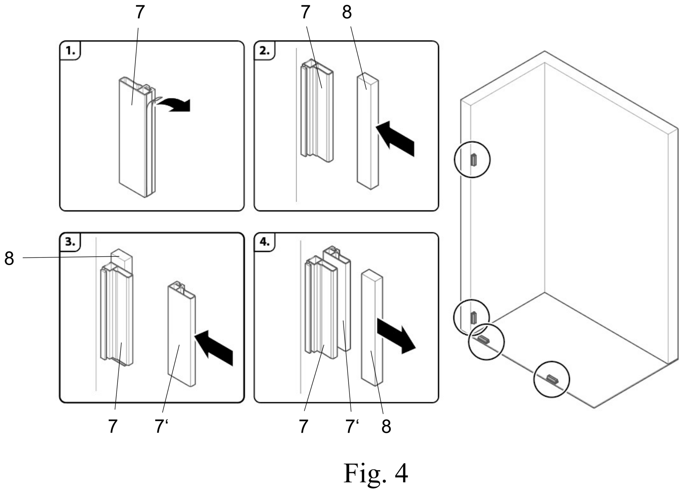

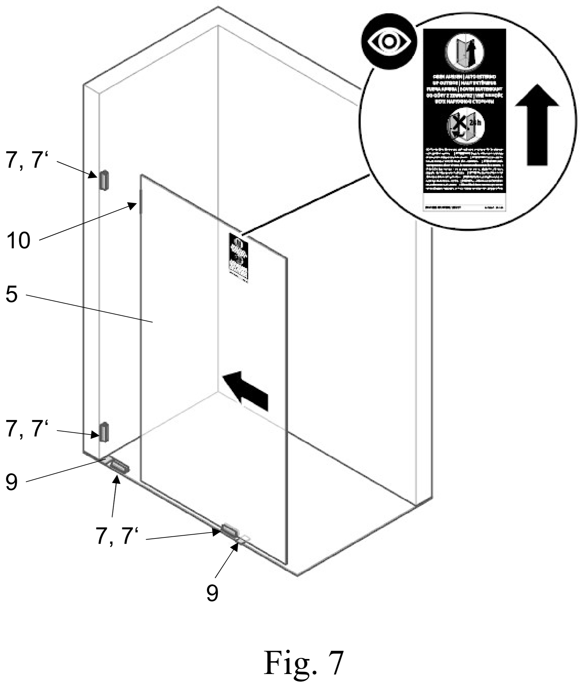

In Fig. 4 ist das Anbringen von Stützen 7, 7' dargestellt, wobei die Stützen 7, 7' als L-Profile ausgebildet sind und im weiteren Verlauf als Führung für das Einsetzen der Duschabtrennung 5 dienen. Hierfür werden zunächst zwei erste Stützen 7 an der Wand und zwei erste Stützen 7 am Bodenbelag montiert. Diese vier ersten Stützen 7 befinden sich in einer Flucht. Darauffolgend wird ein Bauelement 8, wie z. B. ein Holzklotz, an den bereits montierten ersten Stützen 7 platziert, um vier zweite Stützen 7' anzubringen, wobei diese spiegelbildlich zu den bereits montierten ersten Stützen 7 montiert werden. Die Breite des Bauelementes 8 entspricht hierbei der Breite der Duschabtrennung 5. Die acht L-Profile sind klebend an der Wand und dem Bodenbelag montiert, sodass ein einfaches Entfernen gewährleistet ist. Diese erstellte Führung ermöglicht ein möglichst präzises und einfaches Einführen der Duschabtrennung 5. Der Schritt des Einführens ist in Fig. 7 gezeigt.

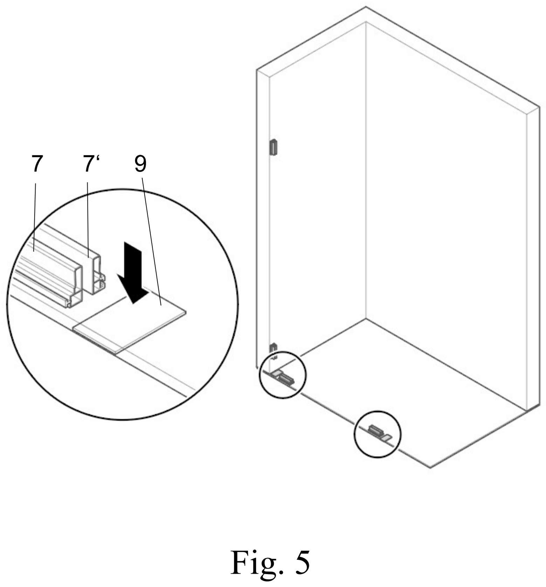

Der Prozess des Auflegens von Abstandshalter 9, welche auf dem Bodenbelag aufgelegt werden, ist in Fig. 5 gezeigt. Mittels den Abstandshalter 9 ist es möglich den Abstand zwischen Duschabtrennung 5 und Bodenbelag einzustellen. Die Abstandshalter 9 können hierbei zunächst breiter als die Duschabtrennung 5 sein, da diese zuschneidbar sind auf die Breite der Duschabtrennung 5.

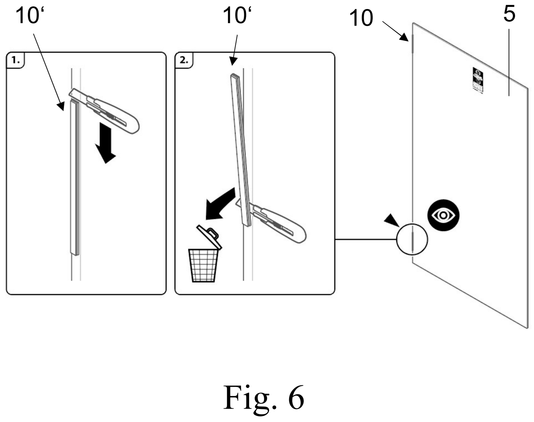

An einer Duschabtrennung 5 sind zwei erfindungsgemäße Zwischenmittel 10, 10' an der vertikalen Stirnseite der Duschabtrennung 5 montiert. Ein erstes Zwischenmittel 10 ist im oberen Bereich der Duschabtrennung 5 montiert, während ein zweites Zwischenmittel 10' im unteren Bereich der Duschabtrennung 5 angebracht ist. Fig. 6 stellt das Entfernen des im unteren Bereich angeordneten zweiten Zwischenmittels 10' dar. Durch das Entfernen eines Zwischenmittels 10, 10' ist es möglich Unebenheiten an der Wand auszugleichen.

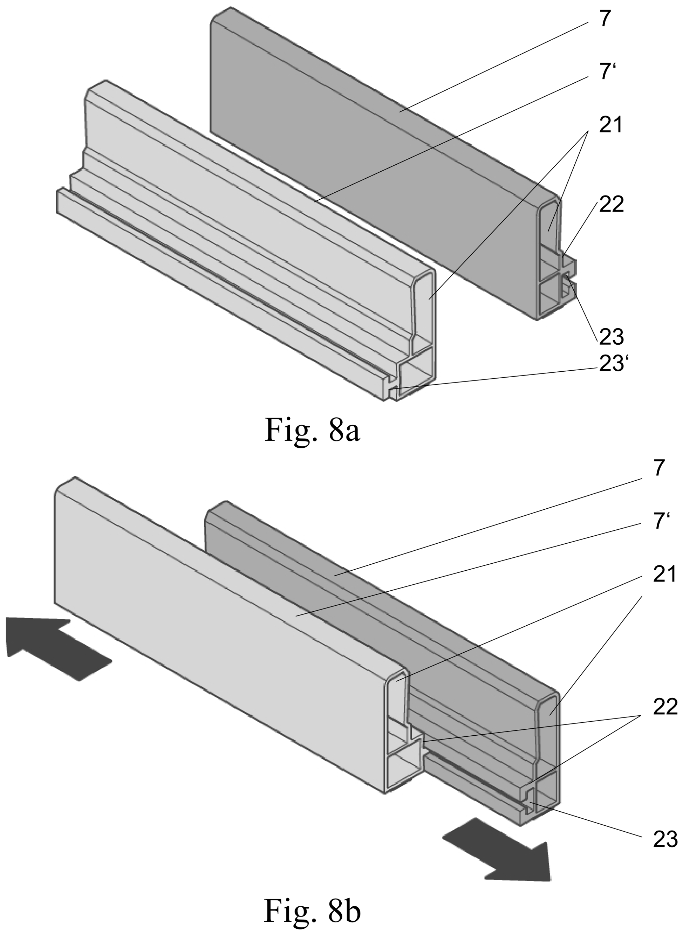

Fig. 8a zeigt eine Stütze 7 für die Montage einer Duschabtrennung 5 an einer Wand oder an einem Bodenbelag mittels eines Zwischenmittels der vorgenannten Art. Die Stütze weist zwei L-förmige Abschnitte 7, 7' auf, zwischen welche die Duschabtrennung 5 platziert und ausgerichtet werden kann. Die L-förmigen Abschnitte 7, 7' weisen einen langen Schenkel 21 und einen kurzen Schenkel 22 auf. Die Darstellung der Fig. 8a zeigt den Zustand als Montagehilfe- also den getrennten Zustand. Eine solche Stütze 7, 7' kann dazu dienen, die Duschabtrennung 5 der vorgenannten Art ideal zu platzieren (siehe auch Fig. 4 bis 7).

Im verbundenen Zustand (Fig. 8b) kann die Stütze 7 als Kantenschutz für die Duschabtrennung 5 dienen. Die beiden L-förmigen Abschnitte 7, 7' sind dabei an den kurzen Schenkeln 22 über Verbindungselemente 23, 23' miteinander verbunden, sodass die kurzen Schenkel 22 miteinander lösbar verbunden sind und im diesem verbundenen Zustand einen U-förmigen Kanal bilden. Der U-förmige Kanal weist eine Dicke auf, die der Dicke der Duschabtrennung 5 entspricht. Die Verbindung der L-förmigen Abschnitte 7, 7' ist lösbar, sodass die beiden L-förmigen Abschnitte nach Lösen der Verbindung Rücken an Rücken mit Abstand platzierbar sind, um einen Kanal zwischen den langen Schenkeln der L-förmigen Abschnitte zu bilden (siehe Fig. 8a).

Die Verbindungselemente bestehen aus komplementären Profilformen 23, 23', die sich entlang der kurzen Schenkel 22 des L erstrecken und ineinander schiebbar sind und einen Formschluss bilden. Dadurch kann in der Art einer Schwalbenschwanzverbindung eine Verbindung hergestellt werden. Im vorliegenden Fall ist eine der beiden Profilformen 23 eine Nut, die sich zur offenen Seite verjüngt und eine Profilform bildet eine Feder 23', die komplementär zur Nut 23 ist.

## Patentansprüche

1. Zwischenmittel (10, 10') zur Montage einer Duschabtrennung (5), bevorzugt einer Glasscheibe, an einer Wand und/oder einem Bodenbelag,
wobei das Zwischenmittel (10, 10') zumindest drei Schichten aufweist,
**dadurch gekennzeichnet, dass** eine erste Schicht (3) der Duschabtrennung (5) zugewandt und mit der Duschabtrennung (5) klebend verbindbar ist, während eine zweite Schicht (1) der Wand oder dem Bodenbelag zugewandt und mit der Wand oder dem Bodenbelag klebend verbindbar ist,
wobei eine dritte Schicht (2) zwischen der ersten und zweiten Schicht (1, 3) angeordnet ist und wobei die dritte Schicht (2) einen Kunststoff, bevorzugt einen transparenten Kunststoff, umfasst.

2. Zwischenmittel nach Anspruch 1, **dadurch gekennzeichnet, dass** die erste und zweite Schicht (1, 3) ein transparentes Material, bevorzugt eine transparente Klebeschicht, umfassen.

3. Zwischenmittel nach Anspruch 1 oder Anspruch 2, **dadurch gekennzeichnet, dass** die dritte Schicht (2) eine Kontur aufweist, wobei die Kontur im Querschnitt vorzugsweise als Doppel-T, T, U, H oder I ausgeformt ist.

4. Zwischenmittel nach einem der Ansprüche 1 bis 3, **dadurch gekennzeichnet, dass** eine vorzugsweise abziehbare Abdeckfolie an der ersten Schicht (3) und / oder zweiten Schicht (1) angeordnet ist.

5. Duschabtrennung, vorzugsweise Glasscheibe, umfassend ein Zwischenmittel (10, 10') nach einem der Ansprüche 1 bis 3, wobei das Zwischenmittel (10, 10') über die erste Schicht (3) mit zumindest einer Stirnseite der Duschabtrennung (5) klebend verbunden ist.

6. Duschabtrennung nach Anspruch 5, **dadurch gekennzeichnet, dass** eine abziehbare Abdeckfolie an der zweiten Schicht (1) des Zwischenmittels (10, 10') angeordnet ist.

7. Verfahren zur Montage einer Duschabtrennung, vorzugsweise eine Glasscheibe, an einer Wand und/oder einem Bodenbelag mittels eines Zwischenmittels (10, 10') nach einem der Ansprüche 1 bis 4, umfassend die Schritte:
(a) Reinigen und Vorbereiten der Montageflächen,
(b) Anbringen von Stützen (7, 7'), vorzugsweise L-förmige Stützen, an der Wand und dem Bodenbelag, wobei die Stützen (7, 7') als Führung zum Einsetzen und Anbringen der Duschabtrennung (5) dienen,
(c) Einführen der Duschabtrennung (5) in die Führung, welche von den Stützen (7, 7') erzeugt wurde,
(d) Verbinden der Duschabtrennung (5) mit der Wand und dem Bodenbelag über zumindest ein Zwischenmittel (10, 10'),
(e) Entfernen der Stützen (7, 7'), und
(f) Verkleben und Abdichten der Duschabtrennung (5) mit der Wand und dem Bodenbelag mittels einem Dichtmittel (4), vorzugsweise Silikon oder Acrylatpolymer.

8. Verfahren nach Anspruch 7, **dadurch gekennzeichnet, dass** zumindest ein Zwischenmittel (10, 10') mit einer vertikalen Stirnseite der Duschabtrennung (5) verbunden ist.

9. Verfahren nach Anspruch 7, **dadurch gekennzeichnet, dass** vor Schritt (c) ein Zwischenschritt abläuft, in welchem eine erste abziehbare Abdeckfolie von zumindest einem Zwischenmittel (10, 10') abgezogen und das Zwischenmittels (10, 10') mit der Wand, dem Bodenbelag oder der Duschabtrennung (5), bevorzugt Stirnseite der Duschabtrennung (5), verbunden wird.

10. Verfahren nach einem der Ansprüche 7 bis 9, **dadurch gekennzeichnet, dass** nach Schritt (c) ein Zwischenschritt erfolgt, welcher das Abziehen einer zweiten abziehbaren Abdeckfolie von zumindest einem Zwischenmittel (10, 10') und das Verbinden der Duschabtrennung (5) mit der Wand und dem Bodenbelag mit dem Zwischenmittel (10, 10') beinhaltet.

11. Verfahren nach einem der Ansprüche 7 bis 10, **dadurch gekennzeichnet, dass** nach Schritt (c) ein Zwischenschritt erfolgt, welcher das Abziehen einer zweiten abziehbaren Abdeckfolie von zumindest einem Zwischenmittel (10, 10') und das Verbinden der Duschabtrennung (5) mit der Wand oder dem Bodenbelag mittels Zwischenmittel (10, 10') beinhaltet.

12. Stütze (7, 7') für die Montage einer Duschabtrennung (5) an einer Wand oder einem Bodenbelag, wobei die Stütze (7, 7') zwei L-förmige Abschnitte aufweist, wobei jeder L-förmige Abschnitt einen langen Schenkel (21) und einen kurzen Schenkel (22) umfasst, wobei die beiden L-förmigen Abschnitte an den kurzen Schenkeln (22) Verbindungselemente (23, 23') aufweisen, sodass die kurzen Schenkel (22) miteinander lösbar verbindbar sind und im verbundenen Zustand einen U-förmigen Kanal bilden, wobei die Verbindung der L-förmigen Abschnitte lösbar ist, sodass die beiden L-förmigen Abschnitte nach dem Lösen der Verbindung Rücken an Rücken mit Abstand platzierbar sind.

13. Stütze nach Anspruch 12, **dadurch gekennzeichnet, dass** der U-förmige Kanal eine Breite aufweist, welcher der Dicke der Duschabtrennung (5) entspricht.

14. Stütze nach Anspruch 12 oder Anspruch 13, **dadurch gekennzeichnet, dass** das Verbindungselement (23) des einen kurzen Schenkels (22) eine komplementäre Profilform zur Profilform des anderen Verbindungselements (23') des anderen kurzen Schenkels (22) aufweist, wobei vorzugsweise die beiden zueinander komplementären Profilformen sich entlang der kurzen Schenkel erstrecken und ineinander schiebbar sind, sodass sie einen Formschluss bilden.

15. Duschabtrennung, vorzugsweise Glasscheibe, umfassend eine Stütze nach einem der Ansprüche 12 bis 14, wobei die Stütze (7, 7') einen Kantenschutz der Duschabtrennung (10, 10') bildet.
